# EUROPÄISCHE PATENTANMELDUNG

(11) **EP 1 983 728 A2**
(43) Veröffentlichungstag der Anmeldung: **22.10.2008**
(21) Anmeldenummer: 08004995.0
(22) Anmeldetag: 18.03.2008
(51) Int. Cl.: H04M 1/02

(54) **Verschiebbares tragbares Gerät mit C-förmigem Federelement**

(30) Priorität: 18.04.2007 DE 102007018179
(71) Anmelder: Lumberg Connect GmbH, 58579 Schalksmühle (DE)
(72) Erfinder: Taschke, Henning, Dr., 44869 Bochum (DE)
(74) Vertreter: Ostriga, Sonnet, Wirths & Roche

(57) **Zusammenfassung**

Die Erfindung betrifft ein tragbares Gerät (10), wie Mobilfunktelefon, welches wenigstens zwei zueinander relativ bewegliche Gehäuseteile (11;12) und zumindest ein Federelement (13) mit zwei Anlenkmitteln (14;15) umfasst, wobei ein erstes Anlenkmittel (14) zumindest mittelbar einem ersten Gehäuseteil (11) und ein zweites Anlenkmittel (15) zumindest mittelbar einem zweiten Gehäuseteil (12) zugeordnet ist und das Federelement, ausgehend von einer ersten Endlage der Gehäuseteile, unter Ausführung einer Relativbewegung der Gehäuseteile zueinander bis zu einer Kraftumkehrstellung mit einer beaufschlagt wird, welche die Gehäuseteile unter Fortführung der Relativbewegung und unter Abbau der Federspannung in eine zweite Endlage drängt.

## Beschreibung

Die Erfindung betrifft ein tragbares Gerät, wie Mobilfunktelefon, tragbarer Computer oder persönlicher digitaler Assistent (PDA), welches wenigstens zwei zueinander relativ bewegliche Gehäuseteile und zumindest ein Federelement mit zwei Anlenkmitteln umfasst, wobei ein erstes Anlenkmittel zumindest mittelbar einem ersten Gehäuseteil und ein zweites Anlenkmittel zumindest mittelbar einem zweiten Gehäuseteil zugeordnet ist und das Federelement, ausgehend von einer ersten Endlage der Gehäuseteile, unter Ausführung einer Relativbewegung der Gehäuseteile zueinander bis zu einer Kraftumkehrstellung mit einer Federspannung beaufschlagt wird, welche die Gehäuseteile unter Fortführung der Relativbewegung und unter Abbau der Federspannung in eine zweite Endlage drängt.

Ein gattungsgemäßes Gerät ist beispielsweise in EP 1 422 911 B1 in Form eines Mobiltelefons offenbart, dessen obere und untere Gehäuseschale und Vermittlung eines Schlittens gegeneinander relativ verschieblich sind. Bestandteil dieses Schlittens sind zwei Schenkelfedern, welche in einem zentralen Bereich ein Windungsauge mit mehreren übereinander angeordneten Federwindungen aufweisen. Beide Schenkelfedern weisen schenkelendseitig jeweils ein Anlenkmittel auf, wobei die ersten Anlenkmittel in dem ersten Gehäuseteil und die zweiten Anlenkmittel dem zweiten Gehäuseteil unter Vermittlung der Schlittenkonstruktion zugeordnet sind. Bei Verwendung eines derartigen Mechanismusses zum Öffnen bzw. Schließen des Mobilfunktelefon-Gehäuses müssen im Schlitten Aussparungen für Anlenkmittel der Schenkelfedern sowie eine Schenkelfederabdeckung vorgesehen sein.

An gattungsgemäße Geräte werden in verstärktem Maße hohe Anforderungen an die Miniaturisierung gestellt. Die Geräte werden in ihrer Bauform zunehmend kleiner, gleichzeitig nimmt ihr Funktionsumfang stetig zu, so dass für eine zunehmende Anzahl von Bauteilen ein immer geringerer Bauraum zur Verfügung steht. Hierin ist auch der Nachteil des vorbeschriebenen Standes der Technik zu sehen, dessen Öffnungsmechanismus Schenkelfedern mit einer gewissen Höhe und der Schlittenkonstruktion einen vergleichsweise großen Bauraum im Mobiltelefon einnimmt.

Aufgabe der Erfindung ist es, ein tragbares Gerät mit zueinander relativ beweglichen Gehäuseteilen zu schaffen, dessen Mechanismus zum Öffnen bzw. Schließen wesentlich einfacher und infolgedessen zuverlässiger und kostengünstiger aufgebaut ist und zusätzlich einen geringeren Bauraum einnimmt.

Gelöst wird die Aufgabe von einem tragbaren Gerät mit den Merkmalen des Anspruches 1, welches sich insbesondere dadurch kennzeichnet, dass das Federelement als C-förmige Feder ausgebildet ist, die schwenkbar im Gerät gelagert ist und bei der Relativbewegung der Gehäuseteile eine Schwenkbewegung parallel zu einer Bewegungsbahn der Gehäuseteile vollzieht.

Die Verwendung einer solchen C-Feder, insbesondere wenn sie gemäß einer bevorzugten Ausführungsform als Stanzteil ausgebildet ist, benötigt in der Höhe einen wesentlich geringeren Bauraum, da keine übereinander liegenden Federwindungen vorhanden sind.

Auch auf eine aufwendige Schlittenkonstruktion kann verzichtet werden, wenn erstes und zweites Gehäuseteile zwei zueinander komplementäre, die Öffnungsbewegung stabilisierende Steuermittel, in etwa nach dem Nut und Federprinzip, aufweisen. Der Bewegungsraum der C-Feder beim Öffnen bzw. Schließen des Gehäuses ist wesentlich geringer.

Besonders bevorzugt ist eine Ausführungsform, bei welcher das Federelement mehrere seriell zwischen zwei Anlenkmitteln angeordnete, miteinander verbundene C-Federn umfasst. Das serielle Aneinanderreihen mehrerer C-förmiger Federelemente ermöglicht es auf vorteilhafte Weise, Federweg und Federspannung zu beeinflussen. So können einerseits technische Vorgaben an den Öffnungsmechanismus leicht umgesetzt werden (z.B. Öffnungsweg), andererseits lassen sich auch Anforderungen an ein vorteilhaftes Bedienempfinden erfüllen.

Es ist besonders vorteilhaft, wenn die C-Federn unterschiedliche Radien aufweisen und ineinander verschachtelt angeordnet sind, wobei die Feder mit dem kleinerem Radius im wesentlichen innerhalb des Radius der nächstgrößeren Feder liegt, da auf diese Weise ein Federelement geschaffen wird, welches nicht mehr Bau- und Bewegungsraum benötigt als eine Einzel-C-Feder, jedoch in seinen Federeigenschaften - insbesondere Federweg und Federspannung - gut anpassbar ist.

Um den Bewegungsraum des Federelementes innerhalb des Gerätes möglichst gering zu halten, ist angedacht, dass ein Anlenkmittel im wesentlichen den Mittelpunkt der Federradien bildet.

Der Federweg einer der erfindungsgemäßen C-Feder lässt sich beeinflussen, insbesondere verlängern, indem das erste Anlenkmittel dem ersten Gehäuseteil unter Vermittlung eines Hebels zugeordnet und in seiner Relativbewegung zum zweiten Gehäuseteil geführt ist. Auch wenn diese Konstruktion geringfügig komplexer ist als die eingangs dargestellte, hat sie doch den wesentlichen Vorteil, dass einer vergleichsweise kleinen Feder ein großer Federweg verschafft werden kann, so dass in Summe der Teile ein geringerer Bauraum für den Mechanismus zum Öffnen bzw. Schließen des Gerätes notwendig ist.

Eine konkrete Ausgestaltung dieses Hebels kennzeichnet sich dadurch, dass der Hebel ein an dem zweiten Gehäuseteil ortsfest angeordnetes Hebellager, ein Anlenkmittellager für das erste Anlenkmittel und ein dem ersten Gehäuseteil zugeordnetes Gehäuselager aufweist, wobei das Anlenkmittellager und das Gehäuselager eine Bewegung der in das jeweilige Lager eingreifenden Mittel entlang der Hebellängsachse ermöglichen.

Die Konstruktion lässt sich weiter vereinfachen, wenn der Hebel das Hebellager einenends ausbildet und dort drehbeweglich gelagert ist, das Gehäuselager anderenends ausbildet und das Anlenkmittellager zwischen Hebellager und Gehäuselager angeordnet ist, wobei bevorzugt das Gehäuselager und das Anlenkmittellager jeweils als parallel zur Hebellängsachse ausgerichtetes Langloch ausgebildet ist.

Vorteilhaft ist es weiterhin, wenn das Hebellager am Ort des zweiten Anlenkmittels am zweiten Gehäuseteil angeordnet ist, da dann gehäuseseitig nur ein Lagerelement für Anlenkmittel und Hebel notwendig ist und die Konstruktion weiter vereinfacht wird.

Es ist weiter von Vorteil, wenn die Anlenkmittel schwenkbeweglich gelagert sind.

Weitere Vorteile ergeben sich aus der folgenden Zeichnungsbeschreibung. Es zeigen:
- Fig. 1: ein erfindungsgemäßen Federelement,
- Fig. 2: Darstellung des Federelementes gemäß Fig. 1 in einer ersten Endlage, seiner Kraftumkehrstellung und einer zweiten Endlage zur Verdeutlichung des Bewegungsablaufes,
- Fig. 3: eine Darstellung gemäß Fig. 2, wobei der Federweg mittels eines Hebels verlängert ist und
- Fig. 4: eine schematische Darstellung eines tragbaren Gerätes mit dem in Fig. 3 dargestellten Federelement.

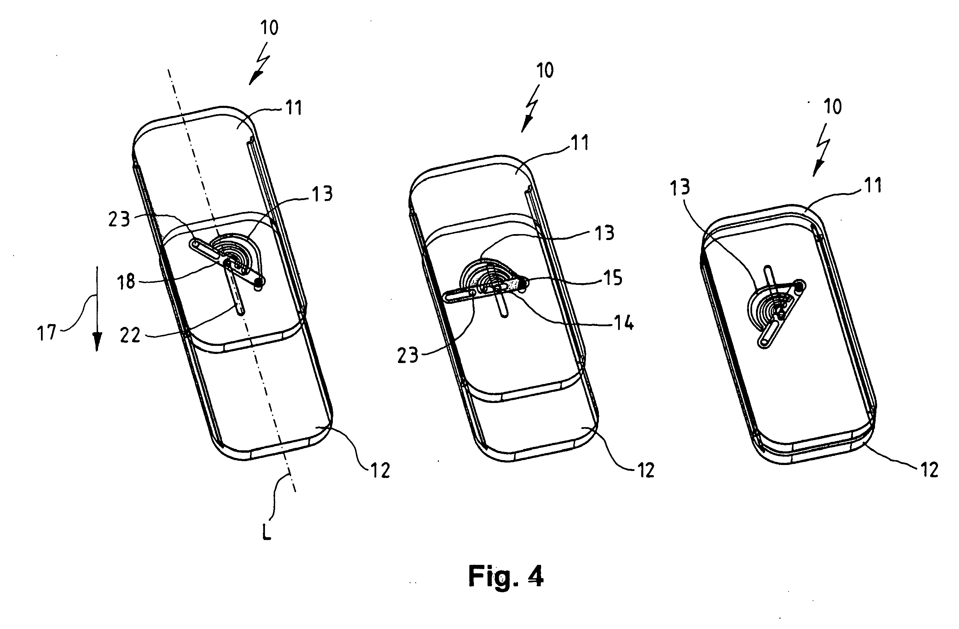

In Fig. 4 ist ein tragbares Gerät, hier ein Mobiltelefon, schematisch dargestellt und insgesamt mit der Bezugsziffer 10 versehen. Das Mobiltelefon weist ein erstes Gehäuseteil - Oberschale 11 - und ein zweites Gehäuseteil - Unterschale 12 - auf, die zueinander relativ entlang einer Längsachse L des Mobiltelefons 10 verschieblich sind.

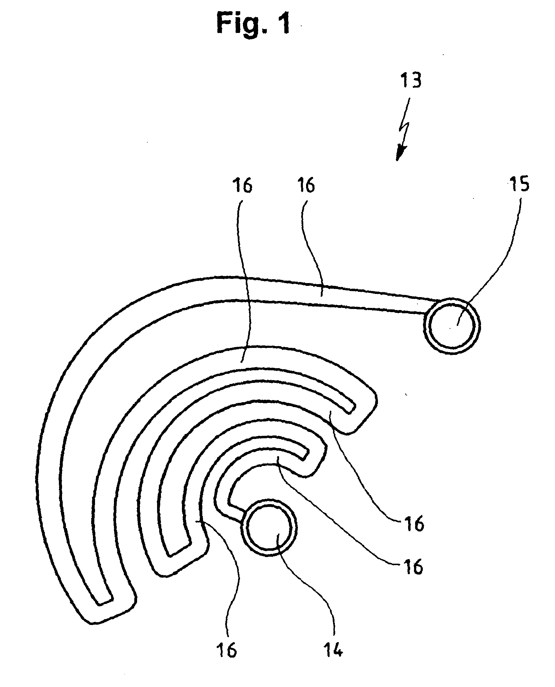

Bestandteil des Mobiltelefons 10 ist das in Fig. 1 im Detail dargestellte Federelement 13. In seiner einfachsten Form ist das Federelement als einfache C-Feder ausgebildet, die hier nicht dargestellt ist. Das in Fig. 1 dargestellte Federelement 13 weist ein erstes Anlenkmittel in Form der ersten Öse 14 und ein zweites Anlenkmittel in Form der zweiten Öse 15 auf. Beide Ösen dienen zur Anordnung des Federelementes 13 an jeweils einem Gehäuseteil.

Das in Fig. 1 dargestellte Federelement 13 besteht aus einer Anzahl mehrerer seriell miteinander verbundener C-Federn 16. Aufgrund der seriellen Anordnung der C-Federn 16 kann man vereinfachend von einer Addition der jeweiligen Federeigenschaften der C-Federn 16 - also insbesondere Federspannung und Federweg - sprechen, die in Summe die Federeigenschaft des Federelementes 13 bilden.

Im vorliegenden Ausführungsbeispiel sind die C-Federn 16 ineinander verschachtelt angeordnet. Jede der C-Federn 16 weist einen anderen Radius auf, wobei die jeweils nächst kleinere C-Feder 16 innerhalb des Radius der nächst größeren C-Feder 16 angeordnet sind. Auf diese Weise nimmt das Federelement 13 insgesamt kaum mehr Bauraum ein, als die größte C-Feder 16, womit sich auf ausgesprochen platzsparende Weise die Grundform der C-Feder bezüglich ihrer Federeigenschaften vorteilhaft weiterbilden lässt.

Das Federelement 13 mit seinen einzelnen C-Federn 16 ist werkstoffeinheitlich-stoffschlüssig als Stanzteil ausgebildet, wobei als Material beispielsweise Kunststoff oder Metall dienen kann. Aufgrund der ineinander verschachtelten C-Federn 16 des Federelementes 13 kann man auch von einem Federelement 13 mit mehreren, mäanderartig ineinander angeordneten Federwindungen 16 sprechen.

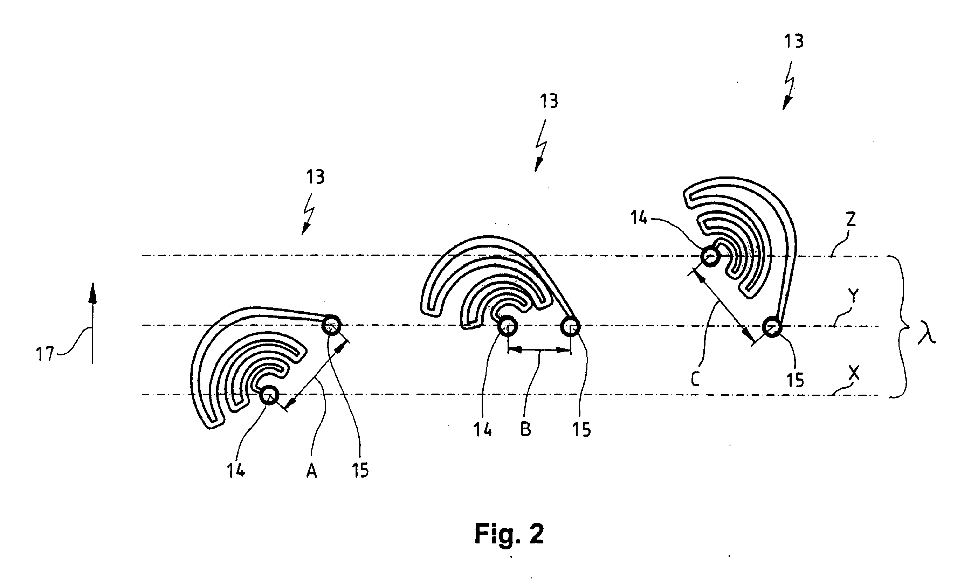

Anhand der Fig. 2 wird die Bewegung des Federelementes 13 innerhalb des Gerätes 10 dargestellt. Dabei befindet sich das nicht dargestellte Gerätegehäuse bezüglich der Papierebene linksseitigen Abbildung des Federelementes in einer ersten Endlage, in der mittleren Abbildung des Federelementes in seiner Kraftumkehrstellung und in der rechtsseitigen Abbildung des Federelementes in seiner zweiten Endlage. Die Öse 14 ist der nicht dargestellten Oberschale 11, die Öse 15 der nicht dargestellten Unterschale 12 des Mobiltelefons 10 zugeordnet, wobei die Öse 15 in Fig. 2 als ortsfest anzusehen ist. Die nicht dargestellte Oberschale 11 gleitet folglich über die ebenfalls nicht dargestellte Unterschale 12.

Die Bewegung erfolgt in Richtung des Pfeiles 17, so dass die Öse 14 in Pfeilrichtung linear zunächst auf die der Linie Y zu bewegt wird. Hierdurch verkürzt sich der Abstand A zwischen den Ösen 14 und 15 auf den in der mittleren Abbildung dargestellten Abstand B, wobei das Federelement 13 gestaucht wird und sich eine Federspannung aufbaut.

In der Kraftumkehrstellung der nicht dargestellten Gehäuseteile 11 und 12 befinden sich die Ösen 14 und 15 bezüglich der Bewegungsrichtung 17 auf gleicher Höhe, angedeutet durch die Linie Y. In dieser Stellung ist die Federspannung des Federelementes maximal. Bei Überschreiten der Linie Y bzw. der Kraftumkehrstellung vergrößert sich der Abstand der Ösen 14 und 15, wodurch Federspannung abgebaut wird. Das Federelement 13 drängt die mit der Öse 14 gekoppelte Oberschale 11 in die zweite Endlage, so dass in der rechtsseitigen Abbildung der Federelementes 13 in Fig. 2 zwischen den Ösen 14 und 15 ein Abstand C vorzufinden ist. Dieser Abstand C kann mit dem Abstand A identisch sein, dies ist jedoch nicht zwingend erforderlich.

Bei der in Fig. 2 dargestellten linearen Bewegung 17 der Öse 14 an der Öse 15 vorbei bewegt sich das Federelement 13 selbst rotativ um die Öse 15 als Mittelpunkt. Die resultierende Kreisbahn entspricht in etwa einem Viertelkreis. Bei Bewegung in Pfeilrichtung 17 erfolgt die Rotationsbewegung im Uhrzeigersinn, bei der Gegenbewegung gegen den Uhrzeigersinn und jeweils parallel zur Bewegungsbahn der Gehäuseteile. Die Bewegungsbahn ist dabei verstellbar als eine parallel zur Gleitfläche verlaufende Bahn, entlang derer sich die Gehäuseteile 11 und 12 relativ zueinander bewegen. Auch eine Drehbewegung ist neben der hier dargestellten Schiebebewegung denkbar.

Der Federweg entspricht dem Weg, den die Öse 14 von ihrer Ausgangsstellung (linksseitige Abbildung) auf der Linie X bis zu ihrer Endstellung (rechtsseitige Abbildung) auf der Linie Z zurücklegt und ist insgesamt mit λ bezeichnet. Dieser Weg bildet gleichzeitig den maximalen Bewegungsweg der Gehäuseteile 11,12 zueinander.

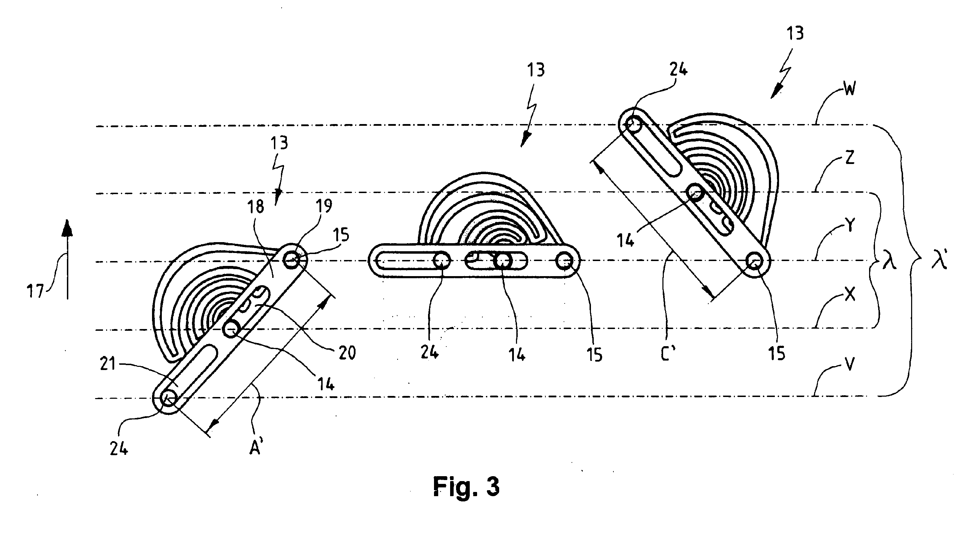

Fig. 3 betrifft eine weitere Ausführungsform der Erfindung. Vom Aufbau gleicht die Fig. 2 der Fig. 3, auch hier wird der Bewegungsablauf des Federelementes 13 während der Bewegung von Unterschale 12 und Oberschale 11 in Pfeilrichtung 17 dargestellt. Insoweit liest sich die Figurenbeschreibung zu Fig. 2 auch auf Fig. 3.

In Fig. 3 ist das Federelement jedoch mit einem Hebel 18 gekoppelt. Der Hebel 18 bildet vorliegend am Ort der Öse 15 ein Hebellager 19 aus, um welches er verschwenkbar ist. Die Öse 15 und das Hebellager 19 sind beispielsweise über einen Zapfen mit der Unterschale 12 verbunden, so dass nur ein Anordnungsmittel zur Anordnung von Öse 15 und Hebellager 19 notwendig ist. Dies vereinfacht die Konstruktion.

Der Hebel 18 weist weiterhin ein langlochartiges Anlenkmittellager 20 auf, mit welchem die Öse 14 gekoppelt ist sowie ein ebenfalls langlochförmiges Gehäuselager 21, in welches beispielsweise ein Lagerzapfen 24 der Oberschale 11 eingreift. Innerhalb von Anlenkmittellager 20 und Gehäuselager 21 sind die jeweils eingreifenden Mittel entlang der Hebellängsachse verschieblich. Auf diese Weise wird die lineare Bewegung 17 der Gehäuseteile 11, 12 in eine Rotationsbewegung des Federelementes 13 umgesetzt, wobei sich - wie zuvor beschrieben - unter Verkürzung des Abstandes der Ösen 14 und 15 zunächst eine Federspannung aufbaut, die anschließend unter Abstandserweiterung beider Ösen 14, 15 und Abbau der Federspannung die Oberschale 11 in eine zweite Endlage drängt. Bei Bewegung der Gehäuseteile 11, 12 zueinander verschieben sich die Lagerzapfen 24 und Öse 14 bis zum Erreichen der Kraftumkehrstellung innerhalb der Lager 20, 21 in Richtung Hebellager 15 und anschließend zurück in ihre Ausgangsposition.

In Fig. 2 war der Bewegungsweg der Gehäuseteile 11, 12 gleich dem Federweg λ, welcher durch den Maximalabstand der Ösen 14 und 15 begrenzt ist, da die Oberschale 11 unmittelbar in die Öse 14 eingreift und die Unterschale 12 unmittelbar mit der Öse 15 verbunden ist.

Im Unterschied dazu bestimmt im Ausführungsbeispiel der Fig. 3 die Hebellänge bzw. die von der Öse 15 beabstandete Anordnung des Lagerzapfens 24 innerhalb des Gehäuselagers 21 in der Endlage den maximalen Bewegungsweg der Gehäuseteile 11 und 12 zueinander. Die Oberschale 11 greift im Gehäuselager 21 ein, welches beliebig weit von der Öse 14 beabstandet sein kann.

In der ersten Endstellung (linksseitige Abbildung) liegt der nicht dargestellte, in das Gehäuselager 21 eingreifende Zapfen der Oberschale 11 auf der Linie V. In der rechtsseitig dargestellten zweiten Endlage liegt dieser Zapfen innerhalb des Gehäuselagers 21 hingegen auf der Linie W. Der Bewegungsweg zwischen Oberschale 11 und Unterschale 12 ist um den Abstand der Linie V zu X bzw. W zu Z und somit um den Abstand zwischen Öse 14 und dem nicht dargestellten, in das Gehäuselager 21 eingreifenden Zapfen der Oberschale 11 verlängert und beträgt nunmehr λ'.

Diese Ausführungsform ermöglicht es ein vergleichsweise kleines Federelement mit kurzem Federweg für einen großen Bewegungsweg zwischen Ober- und Unterschale 11, 12 zu nutzen, so dass bei größerem Bewegungsweg weniger Bauraum für das Federelement 13 bzw. für den Mechanismus zum Öffnen bzw. Schließen nötig ist. Dieser frei werdende Raum kann für andere Gerätebauteile genutzt werden. Neben dem Hebel 18 ist bei der Ausführungsform der Fig. 3 eine nicht dargestellte, in Bewegungsrichtung 17 angeordnete Führung für die Öse 14 vorzusehen, um deren lineare Bewegung und somit den Aufbau einer Federspannung sicher zu stellen.

Fig. 4 zeigt den in Fig. 3 dargestellten Bewegungsablauf des Federelementes 13 und des Hebels 19 noch einmal im Zusammenhang mit Oberschale 11 und Unterschale 12. In der bezüglich der Papierebene linksseitigen Darstellung befindet sich das Mobiltelefon 10 bzw. deren Geräteteile 11 und 12 in einer ersten Endlage, einer offenen Gehäusestellung. Ein Stift 23 der Oberschale 11 greift in das Gehäuselager 21 ein, im von dem Hebel 18 ausgebildeten Anlenkmittellager 20 ist die Öse 14 angeordnet. Die Öse 14 wird weiterhin in einer nutartigen Führung 22 der Unterschale 12 linear in Bewegungsrichtung 18 entlang der Längsachse L des Mobiltelefons 10 geführt.

Die mittlere Abbildung des Mobiltelefons 10 zeigt die Gehäuseteile 11 und 12 in ihrer Kraftumkehrstellung. Die Ösen 14 und 15 sowie der Stift 23 befinden sich auf einer Achse, die senkrecht zur Längsachse L des Mobiltelefons 10 gerichtet ist. Die Federspannung des Federelementes 13 ist maximal. Ausgehend von dieser Stellung und bei Überschreiten der Kraftumkehrstellung drängt das Federelement 13 die Oberschale 11 selbsttätig in die rechtsseitig dargestellte zweite Endlage, eine geschlossene Gehäuseposition.

Zusammenfassend offenbart die Erfindung insbesondere zwei zueinander verschiebbare Gehäuseteile 11 und 12, welche von einer ersten Endlage bis zu ihrer Kraftumkehrstellung manuell bewegt werden und dann selbsttätig aufgrund der aufgebauten Federspannung des Federelementes 13 sich in ihre zweite Endlage bewegen. Dabei wird durch den Einsatz einer C-förmigen Feder, die insbesondere als Stanzteil ausgebildet ist, für die Feder selbst nur ein sehr geringer Bauraum in Anspruch genommen, so dass frei werdender Bauraum für andere Baugruppen oder Bauteilen nutzbar ist.

In einer zweiten Ausführungsform wird der zur Verfügung stehende Federweg mittels eines Hebels 18 derart verlängert, dass wesentlich größere Relativbewegungen zwischen den Gehäuseteilen 11 und 12 bei gleich dimensionierter Feder möglich sind. Dies trägt ebenfalls dazu bei, den Bauraum des Mobiltelefons zu optimieren.

## Patentansprüche

1. Tragbares Gerät (10), wie Mobilfunktelefon, tragbarer Computer oder persönlicher digitaler Assistent (PDA), welches wenigstens zwei zueinander relativ bewegliche Gehäuseteile (11, 12) und zumindest ein Federelement (13) mit zwei Anlenkmitteln (14, 15) umfasst, wobei ein erstes Anlenkmittel (14) zumindest mittelbar einem ersten Gehäuseteil (11) und ein zweites Anlenkmittel (15) zumindest mittelbar einem zweiten Gehäuseteil (12) zugeordnet ist und das Federelement (13), ausgehend von einer ersten Endlage der Gehäuseteile (11, 12), unter Ausführung einer Relativbewegung der Gehäuseteile (11, 12) zueinander bis zu einer Kraftumkehrstellung mit einer Federspannung beaufschlagt wird, welche die Gehäuseteile (11, 12) unter Fortführung der Relativbewegung und unter Abbau der Federspannung in eine zweite Endlage drängt, **dadurch gekennzeichnet, dass** das Federelement (13) als C-förmige Feder (16) ausgebildet ist, die schwenkbar im Gerät (10) gelagert ist und bei Relativbewegung der Gehäuseteile (11, 12) eine Schwenkbewegung parallel zu einer Bewegungsbahn der Gehäuseteile vollzieht.

2. Tragbares Gerät nach Anspruch 1, **dadurch gekennzeichnet, dass** das Federelement (13) mehrere seriell zwischen zwei Anlenkmitteln angeordnete, miteinander verbundene C-Federn (16) umfasst.

3. Tragbares Gerät nach Anspruch 2, **dadurch gekennzeichnet, dass** die C-Federn (16) unterschiedliche Radien aufweisen und ineinander verschachtelt angeordnet sind, wobei die C-Feder (16) mit dem kleinerem Radius im wesentlichen innerhalb des Radius der nächstgrößeren C-Feder (16) liegt.

4. Tragbares Gerät nach Anspruch 3, **dadurch gekennzeichnet, dass** ein Anlenkmittel (14) im wesentlichen den Mittelpunkt der Federradien bildet.

5. Tragbares Gerät nach einem der vorhergehenden Ansprüche, **dadurch gekennzeichnet, dass** das erste Anlenkmittel (14) dem ersten Gehäuseteil (11) unter Vermittlung eines Hebels (18) zugeordnet und in seiner Relativbewegung zum zweiten Gehäuseteil (12) geführt ist.

6. Tragbares Gerät nach Anspruch 5, **dadurch gekennzeichnet, dass** der Hebel (18) ein an dem zweiten Gehäuseteil (12) ortsfest angeordnetes Hebellager (19), ein Anlenkmittellager (20) für das erste Anlenkmittel (14) und ein dem ersten Gehäuseteil (11) zugeordnetes Gehäuselager (21) aufweist, wobei das Anlenkmittellager (20) und das Gehäuselager (21) eine Bewegung der in das jeweilige Lager (20, 21) eingreifenden Mittel entlang der Hebellängsachse ermöglichen.

7. Tragbares Gerät nach Anspruch 6, **dadurch gekennzeichnet, dass** der Hebel (18) das Hebellager (19) einenends ausbildet und dort drehbeweglich gelagert ist, das Gehäuselager (21) anderenends ausbildet und das Anlenkmittellager (20) zwischen Hebellager (19) und Gehäuselager (21) angeordnet ist.

8. Tragbares Gerät nach Anspruch 6 oder 7, **dadurch gekennzeichnet, dass** das Gehäuselager (21) und das Anlenkmittellager (20) jeweils als parallel zur Hebellängsachse ausgerichtetes Langloch ausgebildet ist.

9. Tragbares Gerät nach einem der Ansprüche 6 bis 8, **dadurch gekennzeichnet, dass** das Hebellager (19) am Ort des zweiten Anlenkmittels (15) am zweiten Gehäuseteil (12) angeordnet ist.

10. Tragbares Gerät nach einem der vorhergehenden Ansprüche, **dadurch gekennzeichnet, dass** die Anlenkmittel (14, 15) schwenkbeweglich gelagert sind.

11. Tragbares Gerät nach einem der vorherigen Ansprüche, **dadurch gekennzeichnet, dass** das Federelement (13) ein Stanzteil ist.
